# EUROPÄISCHE PATENTSCHRIFT

(11) **EP 2 274 874 B1**
(45) Veröffentlichungstag und Bekanntmachung des Hinweises auf die Patenterteilung: **03.07.2013**
(21) Anmeldenummer: 08749413.4
(22) Anmeldetag: 05.05.2008
(51) Int. Cl.: H04L 12/26, G05B 19/418

(54) **ÜBERPRÜFUNG EINER KOMMUNIKATIONSVERBINDUNG ZWISCHEN FELDGERÄTEN**
EXAMINATION OF A COMMUNICATION CONNECTION BETWEEN FIELD DEVICES
CONTRÔLE DE LA LIAISON DE COMMUNICATION ENTRE DES APPAREILS DE TERRAIN

(43) Veröffentlichungstag der Anmeldung: 19.01.2011
(73) Patentinhaber: Siemens Aktiengesellschaft, 80333 München (DE)
(72) Erfinder: HÖFLER, Werner, 90542 Eckental (DE); LÜDE, Jens, 91235 Velden (DE); SCHUSTER, Norbert, 90584 Allersberg (DE); STAMMINGER, Stefan, 90409 Nürnberg (DE); STUDENCKI, Pawel, 90491 Nürnberg (DE)
(86) Internationale Anmeldenummer: PCT/EP2008/003735
(87) Internationale Veröffentlichungsnummer: WO 2009/135512

(56) Entgegenhaltungen:
- EP-A- 0 909 056
- US-B1- 6 747 957
- M.R. INGRAM AND R. EHLERS: "Integrating IEC 61850 at TVA Substations for Protection, SCADA, and Enterprise Applications" IEEE JOURNAL, 1. Januar 2006 (2006-01-01), Seiten 1-5, XP002511519
- OMICRON: "IEC 61850 - An important Standard for the Electrical Power Industry" TESTSHOTNEWS, 1. Januar 2006 (2006-01-01), Seiten 1-4, XP002511520
- HASSAN KAGHAZCHI, JOHN HAYES, DONAL HEFFERNAN: "Development of an OPC server for a Fieldbus Diagnosis Toll" INDUSTRIAL AUTOMATION, 15. Januar 2007 (2007-01-15), XP002511521

## Beschreibung

Die Erfindung bezieht sich auf ein Verfahren und eine Testeinrichtung zum Überprüfen einer Kommunikationsverbindung zwischen Feldgeräten einer Automatisierungsanlage für elektrische Energieversorgungsnetze.

Automatisierungsanlagen für elektrische Energieversorgungsnetze umfassen üblicherweise sogenannte Feldgeräte, die in der Nähe von Primärkomponenten des elektrischen Energieversorgungsnetzes angeordnet sind. Solche Primärkomponenten können beispielsweise elektrische Kabel und Leitungen, Transformatoren, Generatoren, Motoren oder Umrichter sein. Üblicherweise nehmen die elektrischen Feldgeräte hierbei den Betriebszustand der jeweiligen Primärkomponenten des elektrischen Energieversorgungsnetzes beschreibende Messwerte auf. Diese Messwerte können entweder gespeichert oder an dem jeweiligen Feldgerät übergeordnete Steuer- und Überwachungskomponenten der Automatisierungsanlage weitergeleitet werden. Außerdem können die Feldgeräte dazu eingerichtet sein, anhand spezieller Algorithmen die aufgenommenen Messwerte dahingehend zu überprüfen, ob sie einen zulässigen oder einen unzulässigen Betriebszustand der jeweiligen Primärkomponente des elektrischen Energieversorgungsnetzes kennzeichnen. Im Falle eines unzulässigen Betriebszustandes werden geeignete Maßnahmen ausgelöst, wie beispielsweise das Öffnen eines Leistungsschalters zum Abschalten der elektrischen Primärkomponente, um diese vor Beschädigung zu schützen. Bei einem unzulässigen Betriebszustand kann es sich beispielsweise um einen Kurzschluss auf einer Leitung des elektrischen Energieversorgungsnetzes handeln.

Die Feldgeräte der Automatisierungsanlage sind üblicherweise nicht nur mit ihnen hierarchisch übergeordneten Steuer- und Überwachungsgeräten verbunden, sondern weisen auch untereinander Kommunikationsverbindungen auf, um in kürzest möglicher Zeit, d.h. in "Echtzeit", Signale miteinander austauschen zu können, die eine geeignete Reaktion auf den jeweils erkannten Betriebszustand der jeweiligen Primärkomponente ermöglichen.

Solche Signale können beispielsweise eine Information über einen erkannten unzulässigen Betriebszustand, einen Befehl zum Auslösen eines von dem Empfängerfeldgerät kontrollierten Leistungsschalters (ein sogenanntes "Mitnahmesignal") oder zum Blockieren eines von dem Empfängerfeldgerät kontrollierten Leistungsschalters (ein sogenanntes "Blockiersignal" oder "Verriegelungssignal") enthalten.

In herkömmlichen Automatisierungsanlagen für elektrische Energieversorgungsnetze waren hierzu die einzelnen Feldgeräte mittels analoger oder digitaler Ein- bzw. Ausgänge über eine Festverdrahtung miteinander verbunden, das heißt über separat zwischen den einzelnen Feldgeräten verlegte elektrische Leitungen. Dies erforderte neben einem hohen Verdrahtungsaufwand auch einen hohen Prüfaufwand, da jede Leitung für sich getestet und die Anschlüsse überprüft werden mussten.

Bei jüngeren Automatisierungsanlagen ist man daher dazu übergegangen, die einzelnen Feldgeräte der Automatisierungsanlage an ein gemeinsames Kommunikationsnetz, wie beispielsweise ein Ethernet-Kommunikationsnetz, anzuschließen und die jeweiligen Signale zwischen den Feldgeräten in Form von Datentelegrammen auszutauschen. Ein solcher Aufbau ist beispielsweise in dem die Kommunikation auf Feldebene in Energieversorgungsanlagen regelnden Standard "IEC 61850" der "International Electrotechnical Commission" bekannt. Bei den gemäß diesem Standard zwischen den einzelnen Feldgeräten ausgetauschten Datentelegrammen handelt es sich um sogenannte "GOOSE"-Datentelegramme (GOOSE = Generic Object Oriented Substation Events). Eine solche Automatisierungsanlage ist beispielsweise aus dem Artikel von M. R. INGRAM and R. EHLERS: "Integrating IEC 61850 at TVA Substations for Protection, SCADA, and Enterprise Applications", IEEE Journal, 01.01.2006, Seiten 1-5, XP002511519, bekannt.

Bei der Inbetriebsetzung oder Veränderung der Automatisierungsanlage ist es notwendig, die zwischen den einzelnen Feldgeräten vorhandenen Kommunikationsverbindungen zum Austausch der Datentelegramme zu überprüfen. Hierbei umfasst der Begriff "Kommunikationsverbindung" nicht nur die tatsächliche physikalische Verbindung eines jeweiligen Feldgerätes mit dem zur Übertragung der Datentelegramme verwendeten Kommunikationsnetz, sondern auch die Einstellungen des sendenden und/oder des empfangenden Feldgerätes, mit denen vorgegeben wird, welche Datentelegramme von welchen Feldgeräten empfangen werden sollen. Solche Einstellungen können beispielsweise Adressierungseinstellungen umfassen.

Der Erfindung liegt daher die Aufgabe zu Grunde, ein Verfahren und ein Testgerät anzugeben, mit dem mit möglichst geringem Aufwand eine Überprüfung der Kommunikationsverbindungen zwischen Feldgeräten in einer Automatisierungsanlage für elektrische Energieversorgungsnetze durchgeführt werden kann.

Hinsichtlich des Verfahrens wird diese Aufgabe durch ein Verfahren gelöst, bei dem mittels einer Testeinrichtung ein erstes Feldgerät zum Aussenden eines Test-Datentelegramms an zumindest ein weiteres Feldgerät über ein zu der zu überprüfenden Kommunikationsverbindung gehörendes Kommunikationsnetz veranlasst wird, das zumindest eine weitere Feldgerät nach Empfang des Test-Datentelegramms ein Bestätigungstelegramm an die Testeinrichtung sendet, und die Testeinrichtung den Eingang aller als Reaktion auf das Test-Datentelegramm empfangenen Bestätigungstelegramme anzeigt, wobei die Testeinrichtung überprüft, ob sie Bestätigungstelegramme aller Feldgeräte erhalten hat, die als Empfänger des Test-Datentelegramms vorgesehen sind, und die Testeinrichtung einerseits diejenigen Kommunikationsverbindungen als korrekt eingerichtet kennzeichnet, zu denen das erwartete Bestätigungstelegramm empfangen worden ist, und andererseits diejenigen Kommunikationsverbindungen als fehlerhaft kennzeichnet, zu denen entweder das erwartete Bestätigungstelegramm nicht empfangen worden ist oder ein nicht erwartetes Bestätigungstelegramm empfangen worden ist, und wobei die Testeinrichtung anhand einer in der Testeinrichtung gespeicherten Konfigurationsdatei die Überprüfung durchführt, ob alle erwarteten Bestätigungstelegramme empfangen worden sind, wobei die Konfigurationsdatei einerseits alle vorgesehenen Kommunikationsverbindungen zwischen den Feldgeräten aufzeigt und andererseits angibt, welche der Feldgeräte das gesendete Test-Datentelegramm empfangen sollen.

Ein Vorteil des erfindungsgemäßen Verfahrens wird hierbei darin gesehen, dass mittels einer einzigen Testeinrichtung alle Feldgeräte der Automatisierungsanlage bezüglich der zwischen Ihnen bestehenden Kommunikationsverbindungen überprüft werden können. Wie bereits eingangs erwähnt, umfasst der Begriff Kommunikationsverbindung hierbei sowohl die physikalische Kommunikationsverbindung als auch die Einstellungen des sendenden und/oder empfangenden Feldgerätes, die z.B. festlegen, welches Datentelegramm von welchem Feldgerät empfangen werden soll. Da alle Feldgeräte, die das Testdatentelegramm empfangen haben, ein Bestätigungstelegramm an die Testeinrichtung senden, kann eine Überprüfung der Kommunikationsverbindungen mittels der einen Testeinrichtung durchgeführt werden, ohne dass der tatsächliche Empfang des Testdatentelegramms an dem jeweiligen empfangenden Feldgerät vor Ort überprüft werden müsste. Bei dieser Ausführungsform kann durch die Testeinrichtung bereits eine automatische Kennzeichnung des Zustands der Kommunikationsverbindungen erfolgen, wodurch das Inbetriebsetzungs- oder Bedienpersonal der Automatisierungsanlage beim Überprüfungsvorgang unterstützt wird.

Außerdem kann die Überprüfung der Kommunikationsverbindungen besonders einfach erfolgen, da die Testeinrichtung das Wissen über die vorgesehenen Kommunikationsverbindungen, das heißt über diejenigen Kommunikationsverbindungen, die im Betriebszustand der Automatisierungsanlage in korrekter Weise funktionieren sollen, aus der Konfigurationsdatei auslesen und so eine automatische Überprüfung durchführen kann.

Eine solche automatische Überprüfung kann auch für alle unterschiedlichen Typen von Test-Datentelegrammen in automatischer Weise durchgeführt werden, da die Testeinrichtung anhand der Konfigurationsdatei erkennen kann, welche Typen von Test-Datentelegrammen von welchen Empfängerfeldgeräten empfangen werden sollen.

Gemäß einer vorteilhaften Ausführungsform des erfindungsgemä-βen Verfahrens ist vorgesehen, dass das Test-Datentelegramm eine Kennzeichnung umfasst, die diejenigen Feldgeräte, die es empfangen, in einen Testmodus schaltet. Hierdurch kann vorteilhaft erreicht werden, dass die empfangenden Feldgeräte zumindest übergangsweise in einen Testmodus wechseln, in dem sie keine Steuersignale an das elektrische Energieversorgungsnetz absenden, um beispielsweise Leistungsschalter zu öffnen, zu schließen oder einen Schaltvorgang zu blockieren. Hierdurch ist es möglich, auch im Betrieb des elektrischen Energieversorgungsnetzes, beispielsweise nach dem Austausch eines defekten Feldgerätes, eine kurzzeitige Überprüfung der Kommunikationsverbindungen zwischen den einzelnen Feldgeräten durchzuführen, ohne Abschnitte des Energieversorgungsnetzes während des Prüfvorgangs abschalten zu müssen.

Eine weitere vorteilhafte Ausführungsform des erfindungsgemä-βen Verfahrens wird darin gesehen, dass das Test-Datentelegramm eine Aufforderung enthält, die diejenigen Feldgeräte, die es empfangen, dazu veranlasst, das Bestätigungstelegramm an die Testeinrichtung zu senden. Auf diese Weise muss nicht in den Empfängerfeldgeräten bereits vorab die Reaktion auf den Empfang eines Test-Datentelegramms hinterlegt sein, da das Test-Datentelegramm selbst das empfangende Feldgerät zum Absetzen des Bestätigungstelegramms an die Testeinrichtung veranlasst. Hierzu kann das Test-Datentelegramm beispielsweise neben der Aufforderung zum Absenden des Bestätigungstelegramms auch eine Identifizierungsadresse der Testeinrichtung umfassen, sodass die Bestätigungstelegramme gezielt an die Testeinrichtung versendet werden können. Alternativ kann das Bestätigungstelegramm auch als sogenannte "Broadcast-Nachricht" an alle Netzwerkteilnehmer (also Feldgeräte und Testeinrichtung) oder sogenannte "Multicast-Nachricht" an einen zuvor ausgewählten Teil der Netzwerkteilnehmer versendet werden.

Gemäß einer weiteren vorteilhaften Ausführungsform des erfindungsgemäßen Verfahrens ist vorgesehen, dass die Testeinrichtung das erste Feldgerät zum Aussenden unterschiedlicher Typen von Test-Datentelegrammen veranlassen kann, wobei sich die unterschiedlichen Typen von Test-Datentelegrammen zumindest hinsichtlich der ihnen als Empfänger zugeordneten weiteren Feldgeräte unterscheiden. Auf diese Weise können beispielsweise unterschiedliche Datentelegramme durch verschiedene Typen des Test-Datentelegramms simuliert werden. Üblicherweise enthalten nämlich die zwischen den jeweiligen Feldgeräten einer Automatisierungsanlage auszutauschenden Telegramme im Betrieb verschiedene Inhalte, wobei je nach dem Inhalt der Datentelegramme unterschiedliche Empfängerkreise angesprochen sein sollen. Daher ist es von Vorteil, wenn während des Prüfvorgangs durch unterschiedliche Typen von Test-Datentelegrammen im Betrieb der Automatisierungsanlage anfallende Datentelegramme unterschiedlichen Inhaltes simuliert werden können, um die Funktionsfähigkeit der jeweiligen Kommunikationsverbindungen für alle möglichen Datentelegramme überprüfen zu können.

Gemäß einer weiteren vorteilhaften Ausführungsform des erfindungsgemäßen Verfahrens ist vorgesehen, dass das Test-Datentelegramm und die Bestätigungstelegramme über dasselbe Kommunikationsnetz übertragen werden. Dies ermöglicht einen besonders einfachen Aufbau der Automatisierungsanlage, da lediglich ein Kommunikationsnetz zwischen den jeweiligen Feldgeräten vorgesehen sein muss.

Alternativ kann jedoch auch vorgesehen sein, dass das Test-Datentelegramm und die Bestätigungstelegramme über getrennte Kommunikationsnetze übertragen werden. Diese Ausführungsform kann beispielsweise bei örtlich nahe beieinander liegenden Feldgeräten vorteilhaft sein, wenn lediglich für die Zeitdauer der Überprüfung ein temporäres Kommunikationsnetz zwischen den einzelnen Feldgeräten und der Testeinrichtung aufgebaut werden muss. Hierdurch kann beispielsweise der Datenverkehr auf den zu überprüfenden Kommunikationsverbindungen des ohnehin zwischen den Feldgeräten vorhandenen Kommunikationsnetzes möglichst gering gehalten werden.

Eine weitere vorteilhafte Ausführungsform des erfindungsgemä-βen Verfahrens sieht vor, dass eine Testeinrichtung verwendet wird, die in eines der Feldgeräte integriert ist. Hierdurch kann beispielsweise durch Ertüchtigung eines der Feldgeräte mit einer Testeinrichtung ein vergleichsweise einfaches System verwendet werden, da keine zusätzlichen Einrichtungen mit den Feldgeräten kommunikationstechnisch verbunden werden müssen.

Alternativ dazu ist es jedoch auch möglich, eine separate Testeinrichtung zu verwenden, die mit den Feldgeräten in Kommunikationsverbindung steht. Dies kann von Vorteil sein, wenn eine Überprüfung der Kommunikationsverbindungen nur selten durchgeführt werden soll und eine Ertüchtigung eines der vorhandenen Feldgeräte mit einer-Testeinrichtung aus Kostengründen unvorteilhaft wäre.

Im Zusammenhang mit dem bereits eingangs erwähnten Kommunikationsstandard IEC 61850 kann es sich bei einer solchen Konfigurationsdatei beispielsweise um eine sogenannte "SCD-Konfigurationsdatei" (SCD = Substation Configuration Description) handeln, die Informationen über Kommunikationsverbindungen und Empfängerkreise (z.B. von GOOSE-Nachrichten) in der Automatisierungsanlage enthält.

Handelt es sich bei der Automatisierungsanlage um eine Automatisierungsanlage, die gemäß dem Standard IEC 61850 eingerichtet ist, kann in vorteilhafter Weise vorgesehen sein, dass als Test-Datentelegramme GOOSE-Telegramme verwendet werden.

Hinsichtlich der Testeinrichtung wird die oben genannte Aufgabe durch eine Testeinrichtung gelöst, die eine Steuereinrichtung aufweist, die derart eingerichtet ist, dass sie ein erstes Feldgerät zum Aussenden eines Test-Datentelegramms an zumindest ein weiteres Feldgerät über ein die zu überprüfende Kommunikationsverbindung umfassendes Kommunikationsnetz veranlassen kann, und den Eingang von Bestätigungstelegramme anzeigt, die von weiteren Feldgeräten als Reaktion auf das empfangene Test-Datentelegramm an die Testeinrichtung gesendet worden sind, wobei die Testeinrichtung überprüft, ob sie Bestätigungstelegramme aller Feldgeräte erhalten hat, die als Empfänger des Test-Datentelegramms vorgesehen sind, und die Testeinrichtung einerseits diejenigen Kommunikationsverbindungen als korrekt eingerichtet kennzeichnet, zu denen das erwartete Bestätigungstelegramm empfangen worden ist, und andererseits diejenigen Kommunikationsverbindungen als fehlerhaft kennzeichnet, zu denen entweder das erwartete Bestätigungstelegramm nicht empfangen worden ist oder ein nicht erwartetes Bestätigungstelegramm empfangen worden ist, und wobei die Testeinrichtung anhand einer in der Testeinrichtung gespeicherten Konfigurationsdatei die Überprüfung durchführt, ob alle erwarteten Bestätigungstelegramme empfangen worden sind, wobei die Konfigurationsdatei einerseits alle vorgesehenen Kommunikationsverbindungen zwischen den Feldgeräten aufzeigt und andererseits angibt, welche der Feldgeräte das gesendete Test-Datentelegramm empfangen sollen.

Eine vorteilhafte Ausführungsform der erfindungsgemäßen Testeinrichtung sieht ferner vor, dass die Testeinrichtung Bestandteil eines Feldgerätes der Automatisierungsanlage ist.

Im Folgenden sollen Ausführungsbeispiele der Erfindung anhand der zeichnerischen Darstellung näher erläutert werden. Hierzu zeigen
- Figur 1: ein erstes Ausführungsbeispiel einer Automatisierungsanlage mit einer angeschlossenen Testeinrichtung;
- Figur 2: ein zweites Ausführungsbeispiel einer Automatisierungsanlage mit einer angeschlossenen Testeinrichtung;
- Figur 3: ein Ausführungsbeispiel einer Automatisierungsanlage mit einer in einem Feldgerät integrierten Testeinrichtung; und
- Figur 4: eine beispielhafte Bildschirmansicht einer auf einer Testeinrichtung ablaufenden Prüfsoftware.

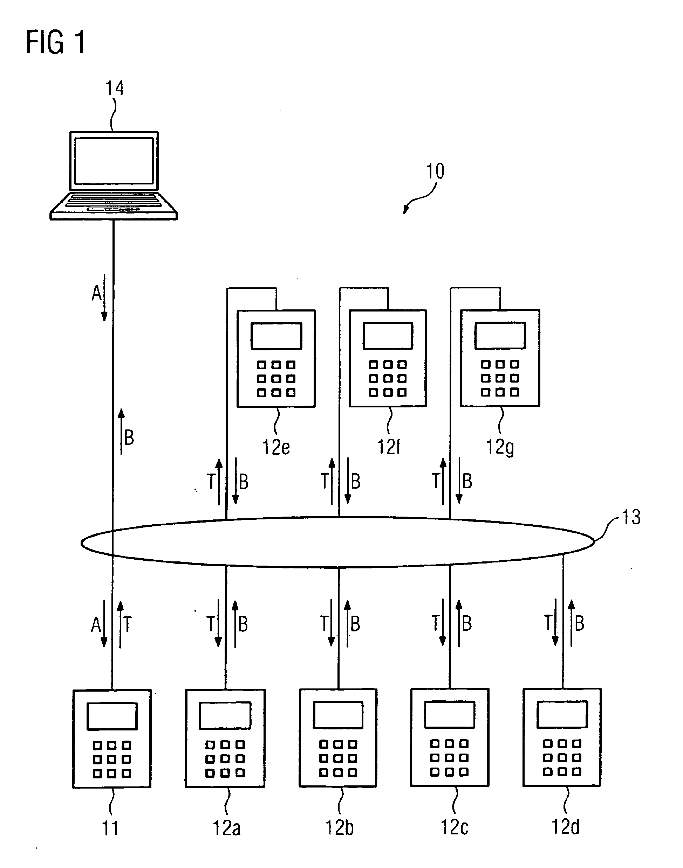

Figur 1 zeigt eine Automatisierungsanlage zur Steuerung und Überwachung eines in Figur 1 der Übersichtlichkeit halber nicht dargestellten elektrischen Energieversorgungsnetzes. Die Automatisierungsanlage weist ein erstes Feldgerät 11 auf, bei dem es sich beispielsweise um ein elektrisches Schutzgerät oder ein leittechnisches Gerät handelt. Solche und andere Feldgeräte zur Automatisierung von Energieversorgungsnetzen werden in der Fachsprache üblicherweise auch als sogenannte "IEDs" (IED = Intelligent Electronic Device) bezeichnet.

Im Folgenden soll der Begriff "Feldgerät" sowohl für Schutzgeräte, leittechnische Geräte und weitere unter dem Begriff IED zusammenfassbare Automatisierungsgeräte verwendet werden.

Die Automatisierungsanlage 10 umfasst ferner weitere Feldgeräte 12a bis 12g. Zum Austausch von Datentelegrammen untereinander weisen die Feldgeräte 11 sowie 12a bis 12g Verbindungen mit einem Kommunikationsnetz 13 auf, bei dem es sich beispielsweise um ein Ethernet-Kommunikationsnetz handeln kann. Dabei kann das Kommunikationsnetz 13 beispielsweise in einer Stern- oder Ringtopologie aufgebaut sein; der konkrete Aufbau spielt für die Durchführung des im Folgenden beschriebenen Verfahrens keine Rolle. Die Feldgeräte 11 sowie 12a bis 12g steuern und/oder überwachen in Figur 1 nicht dargestellte Primärkomponenten eines elektrischen Energieversorgungsnetzes.

Die Feldgeräte 11 sowie 12a bis 12g können ferner auch mit hierarchisch übergeordneten Steuer- und Überwachungsgeräten der Automatisierungsanlage 10 wie beispielsweise einem Stationsüberwachungsgerät oder einer Netzleitstelle verbunden sein; solche Verbindungen sind in Figur 1 jedoch nicht dargestellt, da auch sie für die Erläuterung des im Folgenden dargestellten Verfahrens keine Rolle spielen.

Über das Kommunikationsnetz 13 tauschen die Feldgeräte 11 sowie 12a bis 12g im Betrieb der Automatisierungsanlage 10 Datentelegramme aus, die Informationen enthalten, die innerhalb der Automatisierungsanlage möglichst in Echtzeit (also ohne Verzögerung durch Übertragungs- oder Weiterverarbeitungsschritte) verbreitet werden sollen.

Im Folgenden soll der Begriff "Datentelegramme" für im Betrieb der Automatisierungsanlage 10 zwischen den Feldgeräten 11 sowie 12a bis 12g ausgetauschte Telegramme stehen; davon zu unterscheiden sind "Test-Datentelegramme", die in dem weiter unten näher erläuterten Prüfverfahren verwendet werden, um solche (Betriebs-) Datentelegramme zu simulieren.

Bei in den Datentelegrammen enthaltenen Informationen kann es sich beispielsweise um Zustandsänderungen einer von dem jeweiligen Feldgerät 11 bzw. 12a bis 12g überwachten oder gesteuerten Primärkomponente des elektrischen Energieversorgungsnetzes handeln. Beispielsweise kann eine solche Zustandsänderung anzeigen, dass auf einem Leitungsabschnitt des elektrischen Energieversorgungsnetzes ein Kurzschluss aufgetreten ist. Die Datentelegramme können hierbei entweder bloße Informationen über den Zustandswechsel enthalten oder auch Befehle an andere Feldgeräte umfassen, die diese beispielsweise zum Öffnen, Schließen oder Blockieren eines Leistungsschalters veranlassen sollen.

Ist die Automatisierungsanlage gemäß dem bereits erwähnten Kommunikationsstandard IEC 61850 eingerichtet, so kann es sich bei den über das Kommunikationsnetz 13 übertragenen Datentelegrammen um sogenannte GOOSE-Datentelegramme handeln. Gemäß dem Standard IEC 61850 werden solche GOOSE-Datentelegramme von einem Feldgerät in einem sogenannten Multicast-oder Broadcastverfahren gleichzeitig an alle oder mehrere Empfängerfeldgeräte versendet. Der Standard IEC 61850 sieht hierbei ein regelmäßiges Wiederholen der GOOSE-Datentelegramme vor, wobei die Wiederholungen bei kritischen Zustandsänderungen in höherer Frequenz erfolgen können. Hierdurch ist es möglich, den Zustand, der von den Feldgeräten 11 sowie 12a bis 12g überwachten Primärkomponenten ständig aktuell in der gesamten Automatisierungsanlage zu verteilen und Zustandsänderungen unter hohen Echtzeitbedingungen in der Automatisierungsanlage zu verbreiten.

Allerdings besitzen nicht alle möglichen Arten von in den Datentelegrammen enthaltenen Informationen Relevanz für alle übrigen Feldgeräte der Automatisierungsanlage, sodass bestimmten Datentelegrammen eines sendenden Feldgerätes der Automatisierungsanlage jeweils ein ausgewählter Empfängerkreis von weiteren Feldgeräten zugeordnet sein kann.

Gemäß dem Standard IEC 61850, bei dem die Aussendung eines GOOSE-Datentelegramms mit einem Broadcast- oder Mulitcast-Verfahren stattfindet, sind in den einzelnen Feldgeräten Einstellungen vorgenommen worden, die das jeweilige Feldgerät dazu veranlassen, eine über das Kommunikationsnetz 13 übertragene GOOSE-Telegramm als Empfänger zu akzeptieren oder abzulehnen. Mit anderen Worten entscheiden die Empfängerfeldgeräte bei der IEC 61850 darüber, welche Datentelegramme sie tatsächlich empfangen und in ihrem Empfangsdatenspeicher eintragen und welche Datentelegramme sie als nicht relevant einstufen und nicht in ihren Eingangsdatenspeicher schreiben.

Alternativ zu der Empfängerregelung, wie sie bei der IEC 61850 angewendet wird, kann aber auch im Rahmen der Erfindung vorgesehen sein, dass die jeweiligen Datentelegramme Zieladressen derjenigen Feldgeräte aufweisen, die zu dem ausgewählten Empfängerkreis gehören.

Da der korrekte Empfang der zwischen den Feldgeräten übertragenen Datentelegramme von großer Wichtigkeit für das ordnungsgemäße Funktionieren der Automatisierungsanlage ist, müssen die Kommunikationsverbindungen, über die die Datentelegramme übertragen werden, zumindest bei der Inbetriebsetzung der Automatisierungsanlage sowie bei Änderungen an der Automatisierungsanlage überprüft werden. Wie bereits erwähnt, soll hierbei unter dem Begriff "Kommunikationsverbindung" die physikalische Verbindung zwischen jedem einzelnen Feldgerät 11 bzw. 12a bis 12g und dem Kommunikationsnetz 13, der physikalisch korrekte Aufbau des Kommunikationsnetzes 13 selbst sowie die jeweiligen Sende- und Empfangseinstellungen in den Feldgeräten 11 und 12a bis 12g verstanden werden, wobei die Sende- und Empfangseinstellungen dafür zuständig sind, dass die Datentelegramme korrekt in das Netzwerk 13 übertragen werden und vom richtigen Empfängerkreis innerhalb der Feldgeräte 11 sowie 12a bis 12g empfangen werden.

Ein Ausführungsbeispiel eines Verfahrens zum Durchführen einer Überprüfung der Kommunikationsverbindungen zwischen den einzelnen Feldgeräten 11 sowie 12a bis 12g wird im Folgenden näher erläutert.

Eine Testeinrichtung 14, die in Figur 1 als separate Testeinrichtung in Form einer mit einer entsprechenden Software ausgestatteten Datenverarbeitungseinrichtung (zum Beispiel ein Laptop, ein Desktop-PC oder ein spezielles Testgerät) dargestellt ist, steht mit dem Kommunikationsnetz 13 in Verbindung. Diese Verbindung kann dauerhaft bestehen oder lediglich temporär für die Dauer der Überprüfung eingerichtet worden sein.

Zum Starten der Überprüfung der Kommunikationsverbindungen zwischen den Feldgeräten 11 sowie 12a und 12g sendet die Testeinrichtung über das Kommunikationsnetz 13 ein Aufforderungs-Telegramm A an das erste Feldgerät 11, wodurch das erste Feldgerät 11 dazu veranlasst wird, ein Test-Datentelegramm T auszusenden. Das Test-Datentelegramm T wird über das Kommunikationsnetz 13 an die weiteren Feldgeräte 12a bis 12g übertragen. Nach Empfang des Test-Datentelegramms T senden die weiteren Feldgeräte 12a bis 12g Bestätigungstelegramme B aus, die über das Netzwerk 13 an die Testeinrichtung 14 übertragen werden. Die Testeinrichtung 14 zeigt den Empfang der einzelnen Bestätigungstelegramme B in geeigneter Weise an.

Die Testeinrichtung 14 kann außerdem mit einer Prüfsoftware ausgestattet sein, die es ihr ermöglicht, eine Kennzeichnung vorzunehmen, ob die jeweiligen Kommunikationsverbindungen als korrekt oder fehlerhaft erkannt worden sind. Eine korrekte Kommunikationsverbindung wird dann erkannt, wenn die Testeinrichtung 14 von all denjenigen Feldgeräten 12a bis 12g Bestätigungstelegramme B erhalten hat, von denen ein solches Bestätigungstelegramm B auch erwartet worden ist. Sollte die Testeinrichtung 14 entweder ein solches erwartetes Bestätigungstelegramm B nicht erhalten oder ein Bestätigungstelegramm B erhalten, das überhaupt nicht erwartet worden ist, da es von einem Feldgerät stammt, das nicht zu dem vorgesehenen Empfängerkreis des Test-Datentelegramms gehört, so wird die Kommunikationsverbindung als fehlerhaft eingestuft.

Eine solche Überprüfung auf korrekte oder fehlerhafte Kommunikationsverbindungen kann die Testeinrichtung 14 nur dann durchführen, wenn sie Informationen darüber besitzt, welche Kommunikationsverbindungen zwischen den einzelnen Feldgeräten bezüglich welcher Typen von Testdatentelegrammen bestehen sollen. Hierzu kann die Testeinrichtung 14 beispielsweise auf eine Konfigurationsdatei zugreifen, die Angaben darüber enthält, welche Kommunikationsverbindungen zwischen den einzelnen Feldgeräten 11 und 12a bis 12g eingereichtet sein sollen und welcher Empfängerkreis für welchen Typ von Test-Datentelegrammen vorgesehen ist. Bei einer gemäß der IEC 61850 aufgebauten Automatisierungsanlage kann als Konfigurationsdatei die sogenannte SCD-Datei verwendet werden.

Im Folgenden soll eine beispielhafte Prüfsequenz unter Verwendung zweier Typen von Test-Datentelegrammen erläutert werden:
Zunächst sei angenommen, dass die Testeinrichtung 14 mit Hilfe eines speziellen Aufforderungs-Datentelegramms das erste Feldgerät 11 zum Aussenden eines Test-Datentelegramms eines ersten Typs (im Folgenden: "Test-Datentelegramm (Typ 1)") veranlasst. Der Empfängerkreis des Test-Datentelegramms (Typ 1) umfasst die weiteren Feldgeräte 12a bis 12g. Das Test-Datentelegramm (Typ 1) wird entsprechend der oben erläuterten Vorgehensweise über das Kommunikationsnetz 13 an die anderen Feldgeräte 12a bis 12g übertragen, die daraufhin Bestätigungstelegramme an die Testeinrichtung 14 absenden. Da der Empfängerkreis des Test-Datentelegramms (Typ 1) alle weiteren Feldgeräte 12a bis 12g umfasst, erwartet die Testeinrichtung 14 anhand der ihr durch die Konfigurationsdatei des Automatisierungssystems vorliegenden Informationen, je ein Bestätigungstelegramm von den Feldgeräten 12a bis 12g zu erhalten.

Sollte jedoch beispielsweise das Bestätigungstelegramm des Feldgerätes 12d ausbleiben, so wird die Kommunikationsverbindung zu dem Feldgerät 12d als fehlerhaft gekennzeichnet. Dies kann einerseits daran liegen, dass eine fehlerhafte physikalische Verbindung des Feldgerätes 12d mit dem Kommunikationsnetz 13 vorliegt, beispielsweise verursacht durch einen Leitungsbruch, einen Fehler in einem Kommunikationsmodul des Feldgerätes 12d oder einen fehlerhaften Anschluss des Feldgerätes 12d an das Kommunikationsnetz 13 (wenn z.B. ein Ethernet-Stecker nicht korrekt in das Kommunikationsmodul des Feldgerätes 12d eingesteckt wurde). Andererseits kann das ausbleibende Bestätigungstelegramm auch auf eine fehlerhafte Einstellung hinsichtlich des Empfängerkreises des Test-Datentelegrammes (Typ 1) hinweisen. Bei letzterem kann der Grund des Fehlers beispielsweise eine fehlerhafte Einstellung im Feldgerät 12d sein, wonach das Test-Datentelegramm (Typ 1) von dem Feldgerät 12d nicht akzeptiert wird. Andererseits kann auch eine im Test-Datentelegramm (Typ 1) selbst vergessene Eintragung einer Zieladresse die Ursache des Fehlers darstellen.

Bei dem hier beispielhaft erläuterten Fall zeigt die Testeinrichtung 14 folglich die Kommunikationsverbindung zu dem Feldgerät 12d als fehlerhaft an, während die übrigen Kommunikationsverbindungen als korrekt gekennzeichnet werden. Mit dieser Information kann beispielsweise das Inbetriebsetzungspersonal der Automatisierungsanlage gezielt nach der Ursache der fehlerhaften Kommunikationsverbindung zu dem Feldgerät 12d suchen.

Nach der Abschließen der Überprüfung anhand des Test-Datentelegramms (Typ 1) sei nunmehr angenommen, dass die Testeinrichtung 14 durch Aussendung eines weiteren Aufforderungs-Telegrams das erste Feldgerät 11 zur Aussendung eines Test-Datentelegramms eines zweiten Typs (im Folgenden: "Test-Datentelegramm (Typ 2)") veranlasst. Dieses Test-Datentelegramm (Typ 2) soll den Empfängerkreis auf die Feldgeräte 12a bis 12d einschränken, während die übrigen Feldgeräte 12e bis 12g aus dem Empfängerkreis ausgenommen sein sollen. Beispielsweise kann ein solcher eingeschränkter Empfängerkreis bei speziellen Verriegelungsszenarien notwendig sein, bei denen im Betrieb der Automatisierungsanlage bei Empfang des entsprechenden Datentelegramms die Feldgeräte 12a bis 12d ein Öffnen der von ihnen gesteuerten Leistungsschalter blockieren sollen, während die übrigen Feldgeräte 12e bis 12g hingegen eine Schalthandlung ausführen können sollen. Mit dem Testdatentelegramm (Typ 2) wird ein solches Datentelegramm zur gezielten Verriegelung simuliert, um die Automatisierungsanlage bezüglich eines solchen Verriegelungs-Datentelegramms hinsichtlich ihrer Kommunikationsverbindungen zu überprüfen.

Das erste Feldgerät 11 sendet hierzu das Test-Datentelegramm (Typ 2) über das Kommunikationsnetz 13 aus. Die Feldgeräte 12a bis 12d empfangen im fehlerfreien Fall das Test-Datentelegramm (Typ 2) und senden Bestätigungstelegramme an die Testeinrichtung 14. Empfängt die Testeinrichtung 14 die erwarteten Bestätigungstelegramme der weiteren Feldgeräte 12a bis 12d, so werden die dazugehörenden Kommunikationsverbindungen als korrekt eingerichtet angezeigt.

Sollte ein erwartetes Bestätigungstelegramm ausbleiben (beispielsweise das Bestätigungstelegramm des Feldgerätes 12d), so wird, wie bereits hinsichtlich des Test-Datentelegramms (Typ 1) erläutert, die entsprechende Kommunikationsverbindung als fehlerhaft angezeigt.

Sollte ein zusätzliches, das heißt ein nicht erwartetes, Bestätigungstelegramm empfangen worden sein (beispielsweise ein Bestätigungstelegramm von dem Feldgerät 12f), so kennzeichnet die Testeinrichtung 14 die Kommunikationsverbindung zum Feldgerät 12f als fehlerhaft. Ein solches nicht erwartetes Bestätigungstelegramm weist typischerweise auf eine fehlerhafte Einstellung bezüglich des Empfängerkreises entweder in dem Feldgerät 12f oder in dem Feldgerät 11 hin.

Die Testeinrichtung 14 kann den Benutzer der Prüfsoftware in diesem Zusammenhang auch darauf hinweisen, ob ein erwartetes Bestätigungstelegramm ausgeblieben oder ein nicht erwartetes Bestätigungstelegramm eingegangen ist, um eine Ursachensuche zu vereinfachen.

Das jeweilige Test-Datentelegramm kann Informationen umfassen, die beispielsweise die empfangenden Feldgeräte 12a bis 12g dazu veranlassen, zumindest temporär in einen Testmodus zu wechseln, um nicht versehentlich durch ein Test-Datentelegramm eine tatsächliche Steuerhandlung in dem Energieversorgungsnetz auszulösen. In dem Testmodus wird in den einzelnen Feldgeräten 12a bis 12g eine Ausgabe von Steuersignalen an Komponenten des elektrischen Energieversorgungsnetzes blockiert, sodass eine versehentliche Steuerhandlung vermieden wird. Ebenso kann die Testeinrichtung 14 über das Aufforderungstelegramm das Feldgerät 11 in einen Testmodus wechseln lassen.

Außerdem können die jeweiligen Test-Datentelegramme auch elektronische Aufforderungen enthalten, die die empfangenden Feldgeräte 12a bis 12g dazu veranlassen, ihr Bestätigungstelegramm zu versenden. Diese Aufforderung kann beispielsweise mit einer Zieladresse der Testeinrichtung 14 ergänzt sein, damit die Feldgeräte 12a bis 12g ihre Bestätigungstelegramme korrekt adressieren können. Eine solche, bereits in dem Test-Datentelegramm enthaltene elektronische Aufforderung zur Versendung eines Bestätigungstelegramms macht zusätzliche Einstellungen in den einzelnen Feldgeräten 12a bis 12g bezüglich der Reaktionen auf Test-Datentelegramme und die Zieladresse der Testeinrichtung 14 weitgehend unnötig und erleichtert somit die Durchführung des Prüfverfahrens.

Nach dem die Prüfung unter Nutzung aller vorgesehenen Typen von Test-Datentelegrammen zur Simulation aller möglichen Datentelegramme, die im Betrieb ausgetauscht werden müssen, durchgeführt worden ist, kann die Testeinrichtung 14 ein weiteres Feldgerät, beispielsweise das Feldgerät 12a, als erstes Feldgerät auswählen und dieses zum Versenden der Test-Datentelegramme der unterschiedlichen Typen an die anderen Feldgeräte 11 sowie 12b bis 12g veranlassen.

Nach einem kompletten Testdurchlauf sollte jedes Feldgerät 11 sowie 12a bis 12g einmal als erstes Feldgerät verwendet und die Kommunikationsverbindungen zu den anderen Feldgeräten dementsprechend überprüft worden sein.

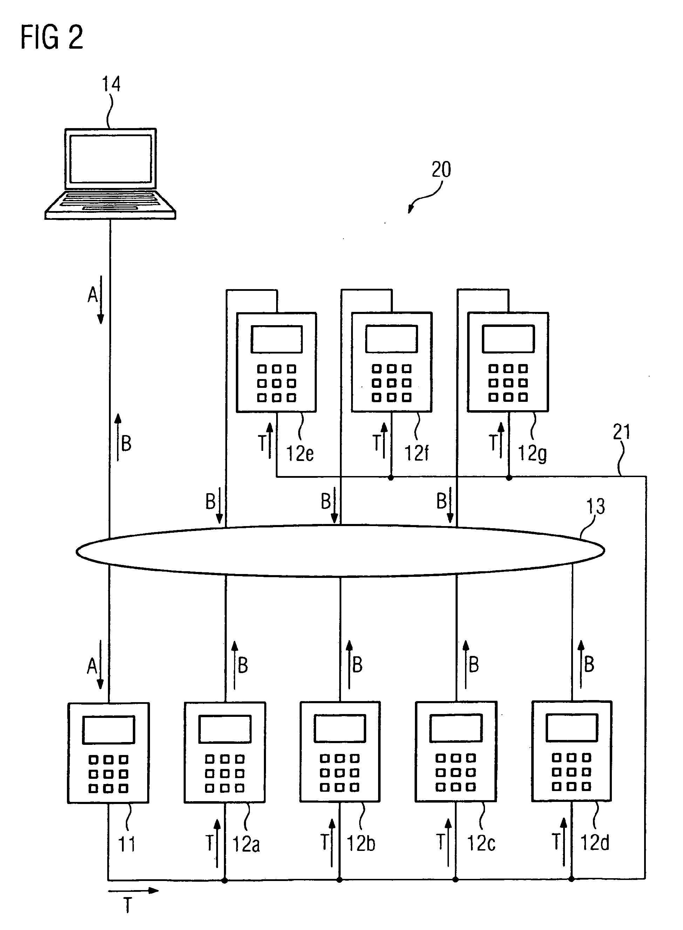

-Figur 2 zeigt ein weiteres Ausführungsbeispiel einer Automatisierungsanlage 20, deren Aufbau sich von der Automatisierungsanlage gemäß Figur 1 lediglich dadurch unterscheidet, dass gemäß Figur 2 ein zusätzliches Kommunikationsnetz 21 vorgesehen ist, über das die Test-Datentelegramme von dem ersten Feldgerät 11 an die weiteren Feldgeräte 12a bis 12g übertragen werden. Die Bestätigungstelegramme B sowie das Aufforderungstelegramm A werden, wie bereits zu dem Ausführungsbeispiel gemäß Figur 1 erläutert, über das Kommunikationsnetz 13 übertragen. Diese Ausführungsform besitzt den Vorteil, den Datenverkehr auf dem Netzwerk 21 zur Übertragung der Test-Datentelegramme, über das ebenfalls im Betrieb der Automatisierungsanlage die Datentelegramme übertragen werden, möglichst gering zu halten. Dies ist insbesondere dann wichtig, wenn eine Überprüfung der Automatisierungsanlage im laufenden Betrieb der Automatisierungsanlage stattfinden soll und die Versendung von Bestätigungstelegrammen nicht die Übertragung für den Betrieb notwendiger Datentelegramme behindern soll.

In dem Ausführungsbeispiel gemäß Figur 2 kann das Kommunikationsnetz 13 beispielsweise ein lediglich temporär eingerichtetes Testkommunikationsnetz zu Überprüfungszwecken sein, das nach erfolgreicher Durchführung der Überprüfung wieder entfernt wird.

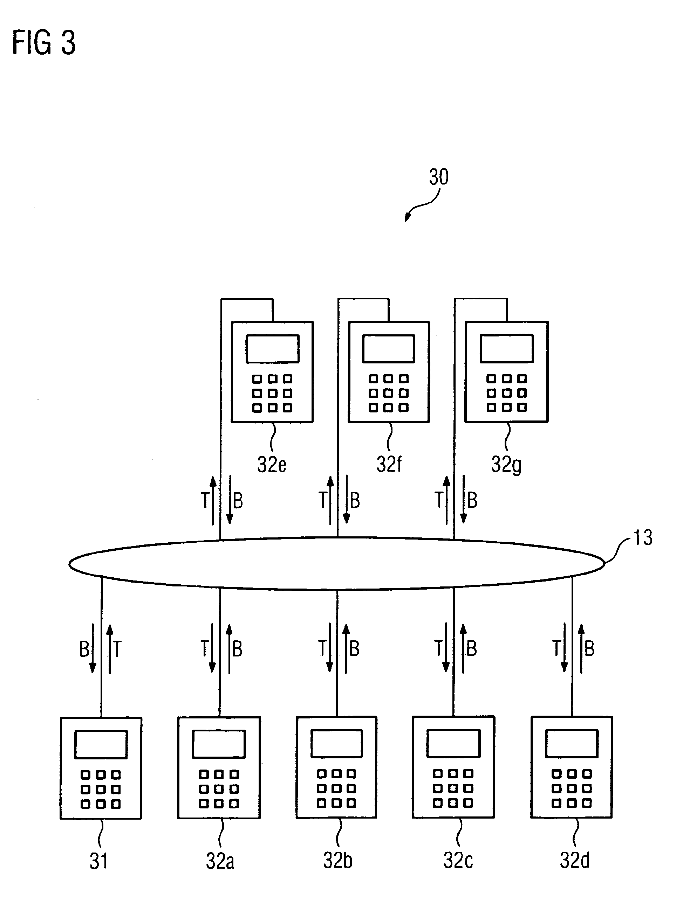

Figur 3 zeigt ein weiteres Ausführungsbeispiel einer Automatisierungsanlage 30, die sich von dem Ausführungsbeispiel gemäß Figur 1 dadurch unterscheidet, dass die Testeinrichtung nunmehr in das Feldgerät 31 integriert ist. Das Feldgerät 31 kann hierbei sowohl als erstes Feldgerät (analog zu Feldgerät 11 in Figur 1) als auch als weiteres Feldgerät (analog zu den Feldgeräten 12a bis 12g in Figur 1) fungieren. In Figur 3 ist aus Gründen der Übersichtlichkeit nur der erste der beiden Fälle dargestellt.

Im ersten Fall sendet das Feldgerät 31 einerseits die Test-Datentelegramme an die weiteren Feldgeräte 32a bis 32g aus und empfängt andererseits die Bestätigungstelegramme B der anderen Feldgeräte 32a bis 32g. Die übrigen Funktionen der Testeinrichtung 14 sind entsprechend der Beschreibung zu Figur 1 ausgeführt und in das erste Feldgerät 31 integriert.

Im zweiten Fall übernimmt die Rolle des ersten Feldgerätes, das die Test-Datentelegramme an die weiteren Feldgeräte aussendet, eines der Feldgeräte 32a bis 32g. Hierbei veranlasst entsprechend der Erläuterung zu Figur 1 die in dem Feldgerät 31 integrierte Testeinrichtung eines der anderen Feldgeräte, beispielsweise das Feldgerät 32a, über ein Aufforderungssignal zum Versenden des Test-Datentelegramms. Die Bestätigungstelegramme werden wie beim erstgenannten Fall an die in dem Feldgerät 31 integrierte Testeinrichtung übertragen.

Abweichend zu der Darstellung in Figur 3 ist es natürlich auch bei einer in einem Feldgerät integrierten Testeinrichtung möglich, die Test-Datentelegramme über ein separates Kommunikationsnetz (vergleichbar zu dem Kommunikationsnetz 21 gemäß Figur 2) zu übertragen.

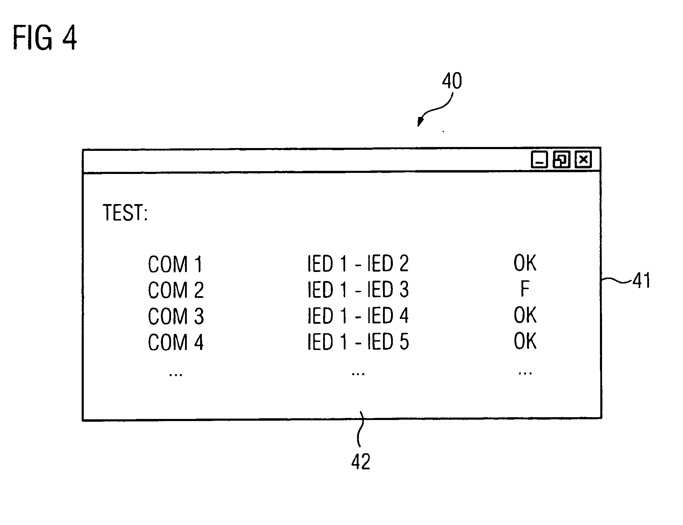

Figur 4 zeigt schließlich eine mögliche und lediglich schematisch dargestellte Ansicht, die als Bildschirmansicht von einer auf einer Testeinrichtung ablaufenden Prüfsoftware zur Anzeige der Überprüfung der Kommunikationsverbindungen generiert werden könnte. Die Ansicht 40 umfasst hierbei ein Anzeigefenster 41 mit einem Textbereich 42, in dem die einzelnen Ergebnisse der Überprüfung der Kommunikationsverbindungen zwischen den einzelnen Feldgeräten aufgelistet sind.

Beispielsweise wird mit "COM 1" eine erste Kommunikationsverbindung zwischen den Feldgeräten "IED1" und "IED2" beschrieben. Das Prüfergebnis "OK" kennzeichnet eine korrekt eingerichtete Kommunikationsverbindung zwischen den Feldgeräten IED1 und IED2. Wie bereits zu Figur 1 eingehend erläutert, bedeutet dies, dass die Testeinrichtung als Reaktion auf das von dem Feldgerät IED1 ausgesendete Test-Datentelegramm von dem Feldgerät IED2 ein Bestätigungstelegramm erhalten hat.

Hinsichtlich der zweiten Kommunikationsverbindung "COM 2", die zwischen dem Feldgerät IED1 und dem Feldgerät IED3 besteht, ergibt das Überprüfungsergebnis "F" also eine fehlerhafte Kommunikationsverbindung. Wie bereits zu Figur 1 erläutert kann dies darauf hinweisen, dass entweder ein erwartetes Bestätigungstelegramm als Reaktion auf das Test-Datentelegramm nicht empfangen worden ist oder ein unerwartetes Bestätigungstelegramm bei der Testeinrichtung eingegangen ist.

Der Textbereich 42 des Anzeigefensters 41 kann zusätzlich auch Informationen bezüglich der Art des Fehlers (z.B.: "erwartetes Bestätigungstelegramm nicht empfangen" oder "nicht erwartetes Bestätigungstelegramm empfangen") umfassen; dies ist in Figur 4 jedoch nicht dargestellt.

Die übrigen Kommunikationsverbindungen "COM 3" und "COM 4" sind, ebenso wie die Kommunikationsverbindung "COM 1", als korrekt eingerichtet gekennzeichnet. Selbstverständlich kann anstelle einer textbasierten Anzeige des Überprüfungsergebnisses auch eine beliebige andere geeignete Anzeigeform gewählt werden, beispielsweise in grafischer oder kombinierter textbasierter und grafischer Darstellungsform.

## Patentansprüche

1. Verfahren zum Überprüfen einer Kommunikationsverbindung zwischen Feldgeräten (11, 12a - 12g) einer Automatisierungsanlage (10) für elektrische Energieversorgungsnetze, bei dem
- mittels einer Testeinrichtung (14) ein erstes Feldgerät (11) zum Aussenden eines Test-Datentelegramms an zumindest ein weiteres Feldgerät (12a - 12g) über ein zu der zu überprüfenden Kommunikationsverbindung gehörendes Kommunikationsnetz (13) veranlasst wird;
- das zumindest eine weitere Feldgerät (12a - 12g) nach Empfang des Test-Datentelegramms ein Bestätigungstelegramm an die Testeinrichtung (14) sendet; und
- die Testeinrichtung (14) den Eingang aller als Reaktion auf das Test-Datentelegramm empfangenen Bestätigungstelegramme anzeigt, wobei- die Testeinrichtung (14) überprüft, ob sie Bestätigungstelegramme aller Feldgeräte (12a - 12g) erhalten hat, die als Empfänger des Test-Datentelegramms vorgesehen sind; und
- die Testeinrichtung (14) einerseits diejenigen Kommunikationsverbindungen als korrekt eingerichtet kennzeichnet, zu denen das erwartete Bestätigungstelegramm empfangen worden ist, und andererseits diejenigen Kommunikationsverbindungen als fehlerhaft kennzeichnet, zu denen entweder das erwartete Bestätigungstelegramm nicht empfangen worden ist oder ein nicht erwartetes Bestätigungstelegramm empfangen worden ist, und wobei
- die Testeinrichtung (14) anhand einer in der Testeinrichtung (14) gespeicherten Konfigurationsdatei die Überprüfung durchführt, ob alle erwarteten Bestätigungstelegramme empfangen worden sind, wobei die Konfigurationsdatei einerseits alle vorgesehenen Kommunikationsverbindungen zwischen den Feldgeräten (11, 12a - 12g) aufzeigt und andererseits angibt, welche der Feldgeräte (z.B. 12a - 12c) das gesendete Test-Datentelegramm empfangen sollen.

2. Verfahren nach Anspruch 1,
**dadurch gekennzeichnet, dass**
- das Test-Datentelegramm eine Kennzeichnung umfasst, die diejenigen Feldgeräte (12a - 12g), die es empfangen, in einen Testmodus schaltet.

3. Verfahren nach Anspruch 1 oder 2,
**dadurch gekennzeichnet, dass**
- das Test-Datentelegramm eine Aufforderung enthält, die diejenigen Feldgeräte (12a - 12g), die es empfangen, dazu veranlasst, das Bestätigungstelegramm an die Testeinrichtung (14) zu senden.

4. Verfahren nach einem der vorangehenden Ansprüche,
**dadurch gekennzeichnet, dass**
- die Testeinrichtung (14) das erste Feldgerät (11) zum Aussenden unterschiedlicher Typen von Test-Datentelegrammen veranlassen kann, wobei sich die unterschiedlichen Typen von Test-Datentelegrammen zumindest hinsichtlich der ihnen als Empfänger zugeordneten weiteren Feldgeräte (12a - 12g) unterscheiden.

5. Verfahren nach einem der vorangehenden Ansprüche,
**dadurch gekennzeichnet, dass**
- das Test-Datentelegramm und die Bestätigungstelegramme über dasselbe Kommunikationsnetz (13) übertragen werden.

6. Verfahren nach einem der Ansprüche 1 bis 4,
**dadurch gekennzeichnet, dass**
- das Test-Datentelegramm und die Bestätigungstelegramme über getrennte Kommunikationsnetze (13, 21) übertragen werden.

7. Verfahren nach einem der vorangehenden Ansprüche,
**dadurch gekennzeichnet, dass**
- eine Testeinrichtung verwendet wird, die in eines der Feldgeräte (31) integriert ist.

8. Verfahren nach einem der Ansprüche 1 bis 6,
**dadurch gekennzeichnet, dass**
- eine separate Testeinrichtung (14) verwendet wird, die mit den Feldgeräten (11, 12a - 12g) in Kommunikationsverbindung steht.

9. Verfahren nach einem der vorangehenden Ansprüche,
**dadurch gekennzeichnet, dass**
- als Test-Datentelegramme GOOSE-Telegramme gemäß IEC 61850 verwendet werden.

10. Testeinrichtung (14) zum Überprüfen einer Kommunikationsverbindung zwischen Feldgeräten (11, 12a - 12g) einer Automatisierungsanlage (10) für elektrische Energieversorgungsnetze, wobei die Testeinrichtung (14) eine Steuereinrichtung aufweist , die derart eingerichtet ist, dass sie
- ein erstes Feldgerät (11) zum Aussenden eines Test-Datentelegramms an zumindest ein weiteres Feldgerät (12a - 12g) über ein die zu überprüfende Kommunikationsverbindung umfassendes Kommunikationsnetz (13) veranlassen kann, und
- den Eingang aller Bestätigungstelegramme anzeigt, die von dem zumindest einen weiteren Feldgerät (12a - 12g) als Reaktion auf das empfangene Test-Datentelegramm an die Testeinrichtung (14) gesendet worden sind, wobei
- die Testeinrichtung (14) überprüft, ob sie Bestätigungstelegramme aller Feldgeräte (12a - 12g) erhalten hat, die als Empfänger des Test-Datentelegramms vorgesehen sind; und
- die Testeinrichtung (14) einerseits diejenigen Kommunikationsverbindungen als korrekt eingerichtet kennzeichnet, zu denen das erwartete Bestätigungstelegramm empfangen worden ist, und andererseits diejenigen Kommunikationsverbindungen als fehlerhaft kennzeichnet, zu denen entweder das erwartete Bestätigungstelegramm nicht empfangen worden ist oder ein nicht erwartetes Bestätigungstelegramm empfangen worden ist, und wobei
- die Testeinrichtung (14) anhand einer in der Testeinrichtung (14) gespeicherten Konfigurationsdatei die Überprüfung durchführt, ob alle erwarteten Bestätigungstelegramme empfangen worden sind, wobei die Konfigurationsdatei einerseits alle vorgesehenen Kommunikationsverbindungen zwischen den Feldgeräten (11, 12a - 12g) aufzeigt und andererseits angibt, welche der Feldgeräte (z.B. 12a - 12c) das gesendete Test-Datentelegramm empfangen sollen.

11. Testeinrichtung nach Anspruch 10,
**dadurch gekennzeichnet, dass**
- die Testeinrichtung Bestandteil eines Feldgerätes (31) der Automatisierungsanlage ist.

## Claims

1. Method for checking a communication link between field devices (11, 12a-12g) of an automation system (10) for electrical energy supply networks, in which
- a test device (14) is used to cause a first field device (11) to emit a test data message to at least one further field device (12a-12g) via a communication network (13) belonging to the communication link to be checked;
- the at least one further field device (12a-12g) transmits a confirmation message to the test device (14) after receiving the test data message; and
- the test device (14) indicates the receipt of all confirmation messages received in response to the test data message, the test device (14) checking whether it has received confirmation messages from all field devices (12a-12g) intended as recipients of the test data message; and
- the test device (14), on the one hand, designating those communication links for which the expected confirmation message has been received as having been correctly set up and, on the other hand, designating those communication links for which either the expected confirmation message has not been received or an unexpected confirmation message has been received as faulty, and
- the test device (14) using a configuration file stored in the test device (14) to check whether all expected confirmation messages have been received, the configuration file, on the one hand, showing all intended communication links between the field devices (11, 12a-12g) and, on the other hand, stating which of the field devices (for example 12a-12c) are intended to receive the transmitted test data message.

2. Method according to Claim 1,
**characterized in that**
- the test data message comprises a designation which switches those field devices (12a-12g) which receive the message into a test mode.

3. Method according to Claim 1 or 2,
**characterized in that**
- the test data message contains a request which causes those field devices (12a-12g) which receive the message to transmit the confirmation message to the test device (14).

4. Method according to one of the preceding claims,
**characterized in that**
- the test device (14) can cause the first field device (11) to emit different types of test data messages, the different types of test data messages differing at least in terms of the further field devices (12a-12g) associated with them as recipients.

5. Method according to one of the preceding claims,
**characterized in that**
- the test data message and the confirmation messages are transmitted via the same communication network (13).

6. Method according to one of Claims 1 to 4,
**characterized in that**
- the test data message and the confirmation messages are transmitted via separate communication networks (13, 21).

7. Method according to one of the preceding claims,
**characterized in that**
- a test device which is integrated in one of the field devices (31) is used.

8. Method according to one of Claims 1 to 6,
**characterized in that**
- a separate test device (14) which has a communication link to the field devices (11, 12a-12g) is used.

9. Method according to one of the preceding claims,
**characterized in that**
- GOOSE messages according to IEC 61850 are used as test data messages.

10. Test device (14) for checking a communication link between field devices (11, 12a-12g) of an automation system (10) for electrical energy supply networks, the test device (14) having a control device which is set up in such a manner that it
- can cause a first field device (11) to emit a test data message to at least one further field device (12a-12g) via a communication network (13) comprising the communication link to be checked, and
- indicates the receipt of all confirmation messages transmitted by the at least one further field device (12a-12g) to the test device (14) in response to the received test data message,
- the test device (14) checking whether it has received confirmation messages from all field devices (12a-12g) intended as recipients of the test data message; and
- the test device (14), on the one hand, designating those communication links for which the expected confirmation message has been received as having been correctly set up and, on the other hand, designating those communication links for which either the expected confirmation message has not been received or an unexpected confirmation message has been received as faulty, and
- the test device (14) using a configuration file stored in the test device (14) to check whether all expected confirmation messages have been received, the configuration file, on the one hand, showing all intended communication links between the field devices (11, 12a-12g) and, on the other hand, stating which of the field devices (for example 12a-12c) are intended to receive the transmitted test data message.

11. Test device according to Claim 10,
**characterized in that**
- the test device is part of a field device (31) of the automation system.

## Revendications

1. Procédé de contrôle d'une liaison de communication entre des appareils ( 11, 12a à 12g ) de terrain d'une installation ( 10 ) d'automatisation pour des réseaux d'alimentation en énergie électrique, dans lequel
- au moyen d'un dispositif ( 14 ) de test, on fait en sorte qu'un premier appareil ( 11 ) de terrain émette un télégramme de données de test vers au moins un autre appareil ( 12a, 12g ) de terrain par un réseau ( 13 ) de communication appartenant à la liaison de communication à contrôler;
- le au moins un autre appareil ( 12a, 12g ) de terrain envoie, après la réception du télégramme de données de test, un télégramme de confirmation au dispositif ( 14 ) de test; et
- le dispositif ( 14 ) de test affiche l'entrée de tous les télégrammes de confirmation, reçus en réaction au télégramme de données de test, le dispositif ( 14 ) de test contrôlant s'il a reçu des télégrammes de confirmation de tous les appareils ( 12a à 12g ) de terrain, qui sont prévus comme récepteur du télégramme de données de test; et
- le dispositif ( 14 ) de test, d'une part, caractérise, comme établies correctement, les liaisons de communication, pour lesquelles le télégramme de confirmation escompté a été reçu et, d'autre part, comme défectueuses, les liaisons de communication, pour lesquelles le télégramme de confirmation escompté n'a pas été reçu ou un télégramme de confirmation qui n'est pas escompté a été reçu, et dans lequel
- le dispositif ( 14 ) de test effectue au moyen d'un fichier de configuration mémorisé dans le dispositif ( 14 ) de test le contrôle du point de savoir, si tous les télégrammes de confirmation escomptés ont été reçus, le fichier de confirmation présentant, d'une part, toutes les liaisons de communication prévues entre les appareils ( 11, 12 à 12g ) de terrain et indiquant d'autre part, les appareils ( par exemple 12a à 12c ) de terrain qui doivent recevoir le télégramme de données de test envoyé.

2. Procédé suivant la revendication 1,
**caractérisé en ce que**
- le télégramme de données de test comprend une caractérisation, qui met les appareils ( 12a à 12g ) de terrain, qui la reçoivent, dans un mode de test.

3. Procédé suivant la revendication 1 ou 2,
**caractérisé en ce que**
- le télégramme de données de test contient une invitation, qui fait que les appareils ( 12a à 12g ) de terrain, qui la reçoivent, envoie le télégramme de confirmation au dispositif ( 14 ) de test.

4. Procédé suivant l'une des revendications précédentes,
**caractérisé en ce que**
- le dispositif ( 14 ) de test peut faire que le premier appareil ( 11 ) de terrain envoie des types différents de télégrammes de données de test, les types différents de télégrammes de données de test se différenciant au moins en ce qui concerne les autres appareils ( 12a à 12g ) de terrain qui leur sont associés comme récepteur.

5. Procédé suivant l'une des revendications précédentes,
**caractérisé en ce que**
- le télégramme de données de test et les télégrammes de confirmation sont transmis par le même réseau ( 13 ) de communication.

6. Procédé suivant l'une des revendications 1 à 4,
**caractérisé en ce que**
- le télégramme de données de test et le télégramme de confirmation sont transmis par des réseaux ( 13, 21 ) de communication distincts.

7. Procédé suivant l'une des revendications précédentes,
**caractérisé en ce que**
- on utilise un dispositif de test, qui est intégré dans l'un des appareils ( 31 ) de terrain.

8. Procédé suivant l'une des revendications 1 à 6,
**caractérisé en ce que**
- on utilise un dispositif ( 14 ) de test distinct, qui est en liaison de communication avec les appareils ( 11, 12a à 12g ) de terrain.

9. Procédé suivant l'une des revendications précédentes,
**caractérisé en ce que**
- on utilise, comme télégrammes de données de test, des télégrammes GOOSE suivant IEC 61850.

10. Dispositif ( 14 ) de test pour le contrôle d'une liaison de communication entre des appareils ( 11, 12a à 12g ) de terrain d'une installation ( 10 ) d'automatisation pour des réseaux d'alimentation en énergie électrique, le dispositif ( 14 ) de test ayant un dispositif de commande, qui est conçu pour
- faire en sorte qu'un premier appareil ( 11 ) de terrain envoie un télégramme de données de test à au moins un autre appareil ( 12a à 12g ) de terrain par un réseau ( 13 ) de communication comprenant la liaison de communication à contrôler, et
- affiche l'entrée de tous les télégrammes de confirmation, qui, en réaction au télégramme de données de test reçu, ont été envoyés du au moins un autre appareil ( 12a à 12g ) de terrain au dispositif ( 14 ) de test, dans lequel
- le dispositif ( 14 ) de test contrôle, s'il a reçu des télégrammes de confirmation de tous les appareils ( 12a à 12g ) de terrain, qui sont prévus comme récepteur du télégramme de données de test; et
- le dispositif ( 14 ) de test, d'une part, caractérise comme établies correctement, les liaisons de communication, pour lesquelles le télégramme de confirmation escompté a été reçu et, d'autre part, comme défectueuses, les liaisons de communication, pour lesquelles le télégramme de confirmation escompté n'a pas été reçu ou un télégramme de confirmation qui n'est pas escompté a été reçu, et dans lequel
- le dispositif ( 14 ) de test effectue au moyen d'un fichier de configuration mémorisé dans le dispositif ( 14 ) de test le contrôle du point de savoir, si tous les télégrammes de confirmation escomptés ont été reçus, le fichier de confirmation présentant, d'une part, toutes les liaisons de communication prévues entre les appareils ( 11, 12 à 12g ) de terrain et indiquant d'autre part, les appareils ( par exemple 12a à 12c ) de terrain qui doivent recevoir le télégramme de données de test envoyé.

11. Dispositif de test suivant la revendication 10,
**caractérisé en ce que**
- le dispositif de test fait partie d'un appareil ( 31 ) de terrain de l'installation d'automatisation.
